# EUROPÄISCHE PATENTSCHRIFT

(11) **EP 2 040 866 B1**
(45) Veröffentlichungstag und Bekanntmachung des Hinweises auf die Patenterteilung: **15.08.2012**
(21) Anmeldenummer: 07763728.8
(22) Anmeldetag: 03.07.2007
(51) Int. Cl.: B22F 3/20, B22F 3/18, B22F 5/00, B28B 3/12, B28B 3/20

(54) **VERFAHREN ZUR HERSTELLUNG EINES EXTRUDIERTEN FORMKÖRPERS**
METHOD FOR PRODUCING AN EXTRUDED MOLDING
PROCÉDÉ DE FABRICATION D'UN CORPS FAÇONNÉ EXTRUDÉ

(30) Priorität: 06.07.2006 AT 5292006 U
(43) Veröffentlichungstag der Anmeldung: 01.04.2009
(73) Patentinhaber: PLANSEE SE, 6600 Reutte (AT)
(72) Erfinder: JAECKEL, Manfred, 27612 Loxstedt (DE); KUNSCHERT, Georg, A-6600 Pflach (AT); ZOBL, Gebhard, A-6677 Schattwald (AT)
(86) Internationale Anmeldenummer: PCT/AT2007/000328
(87) Internationale Veröffentlichungsnummer: WO 2008/003108

(56) Entgegenhaltungen:
- DE-A1-102004 035 311
- FR-A- 2 831 891
- JP-A- 9 063 574
- US-A- 3 330 654

## Beschreibung

Die Erfindung betrifft ein Verfahren zur Herstellung eines Formkörpers.

Es ist bekannt, Folien aus sinterfähigen keramischen Pulvern herzustellen, indem vorzugsweise wässrige Suspensionen unter Verwendung wasserlöslicher Polymere oder Polymerdispersionen in dünnen Schichten auf geeigneten Unterlagen aufgetragen und anschließend getrocknet werden. Mit dieser so genannten Gießfolien- oder Tape-Casting-Technik lassen sich auch metallische Folien herstellen, wie dies beispielsweise in der US-A-3 330 654 beschrieben ist. Die Gießfolientechnik wird bereits seit Jahrzehnten, üblicherweise unter Verwendung von wässrigen Bindersystemen, für oxidkeramische Substrate eingesetzt und ist daher auch auf Grund zahlreicher Anwendungen technisch ausgereift. Man kann mit diesem Verfahren wirtschaftlich dünne Folien, z.B. im Bereich von 0,1 bis 0,5 mm, herstellen.

Bei Dicken über 1 mm erhöhen sich die Trocknungszeiten erheblich und Dickentoleranz und Oberflächenrauhigkeit sind unbefriedigend. Eine kontinuierliche Fertigung von Flachprodukten mit Dicken über 1 mm auf Basis von wässrigen Bindersystemen mit akzeptablen Herstellzeiten ist daher mit der Gießfolientechnik nicht möglich. Die Verwendung von organischen Lösungsmitteln als flüchtige Weichmacher für Polymere ermöglicht aufgrund der Vielfalt der einsetzbaren und auf die jeweiligen Pulvereigenschaften adaptierbaren Substanzen eine Verkürzung der Herstellzeiten und eine Verbesserung der Produkteigenschaften. Diese Vorteile werden jedoch häufig wegen der zu hohen Kosten einer lösungsmittelgerechten Anlagenkonzeption und aus umwelttechnischen Überlegungen nicht genutzt.

Die DE 10 2004 035311 A1 beschreibt ein Verfahren zum Herstellen einer Filterstruktur, das die Verfahrensschritte Herstellen eines Gemisches aus Sintermetallpulver und einem organischen Binder, Herstellen einer Folie aus dem Gemisch, Strukturieren der Folie und Sintern umfasst. Als Binder wird ein Acrylatbinder mit einem leicht flüchtigen organischen Lösungsmittel, beispielsweise Butylacetat oder Alkohol beschrieben. Der Acrylatbinder und das organische Lösungsmittel werden zu einem rakelfähigen Schlicker verarbeitet, der mit einem Filmrakelgerät zu einer Grünfolie verarbeitet wird. Weitere Verfahren zur Folienherstellung sind in der Beschreibung nicht angeführt. In den Ansprüchen ist neben dem Folienrakeln auch noch das Foliengießen und die Folienextrusion erwähnt.

Die Extrusion einer plastifizierten Pulvermasse ist auch in der JP 09 063574 A und der Fr-A-2 831 891 beschrieben. Die Extrusion wird in der Fr-A-2 831 891 zur Herstellung einer Metall/Keramik-Verbundplatte angewandt. Die JP 09 063574 A beschreibt ein Verfahren zur Herstellung eines Formkörpers, das die folgenden Verfahrensschritte umfasst: Herstellen einer Formmasse, umfassend 40 bis 70 Vol.% Metall- und/oder Keramikpulver und 30 bis 60 Vol.% eines thermoplastischen Binders, Plastifizieren der Formmasse und Herstellung eines Grünlings durch Extrudieren der Formmasse, Zuführen des Grünlings zu einem Trägerkörper und Verbinden des Grünlings und des Trägerkörpers durch einen Walzprozess, chemisches und/oder thermisches Entbindern des Grünlings und Sintern des zumindest teilweise entbinderten Grünlings. Als Bindersysteme sind Methyzellulose, Polyolefin, Polyethylen, Acrylic und Polyvinylalkohol erwähnt.

In der US 2006/0039817 ist ein Verfahren zur Herstellung von Blechen beschrieben. Das Verfahren umfasst im Wesentlichen die Schritte: Herstellung eines für das Injection Molding geeigneten Feedstocks, Injection Molding des Feedstocks in Blechform und Sintern auf 100 %ige Dichte. Man arbeitet dabei bevorzugt mit horizontalen Kolbenpressen zur gleichmäßigen Aufbringung der erforderlichen hohen Pressdrücke. Die Trocknungszeiten der Extrudate können je nach Dicke wegen Gefahr der Rissbildung bis zu mehrere Tage betragen. Das beschriebene Verfahren eignet sich aufgrund der geringen Eigenfestigkeit des aus der Düse feucht austretenden Massestranges nur bedingt zur Herstellung von dünnen Flachprodukten, da selbst nach dem Trocknungsprozess eine Handhabung derartig dünner Extrudate wegen Bruchgefahr nur in kleinen Abmessungen möglich ist. Ein kontinuierlicher Herstellprozess ist mit diesem Verfahren nicht möglich.

Es ist daher mit den gegenwärtig in der keramischen und pulvermetallurgischen Industrie üblichen und bekannten Technologien nicht möglich, sinterfähige Pulverfolien, Bänder, Bleche und Platten im Dickenbereich von ca. 0,1 bis 10 mm kontinuierlich mit hoher Oberflächengüte und enger Dickentoleranz kostengünstig herzustellen.

Es ist daher die Aufgabe der vorliegenden Erfindung, ein kontinuierlich arbeitendes Verfahren bereitzustellen, durch das sich wirtschaftlich metallische und keramische Formkörper mit guten mechanischen / physikalischen Eigenschaften und Oberflächenqualität herstellen lassen.

Die Aufgabe wird durch den unabhängigen Anspruch 1 gelöst.

Das Verfahren umfasst dabei die Schritte:
■ Herstellung einer Formmasse, umfassend 40 bis 70 Vol.% Metallund/oder Keramikpulver, 30 bis 60 Vol.% eines thermoplastischen Binders und 0 bis 5 Vol.% Dispergiermittel und/oder sonstige Hilfsmittel;
■ Plastifizieren der Formmasse in einem Extruder und Herstellung eines Grünlings durch Austragen der Formmasse über eine Schlitzdüse
■ Zuführen des Grünlings in ein Glättwalzwerk;
■ Glätten des Grünlings durch ein oder mehrere Glättvorgänge;
■ Chemisches und/oder thermisches Entbindem des geglätteten Grünlings;
■ Sintern des zumindest teilweise entbinderten Grünlings.

Durch den Einsatz eines Extruders, das Austragen über eine Schlitzdüse und das Zuführen des Grünlings in ein Glättwalzwerk ist es möglich, kontinuierlich

Formkörper mit ausgezeichneter Oberflächenqualität, engen Dickentoleranzen und guten Produkteigenschaften herzustellen.

Die erfindungsgemäße Formmasse umfasst 40 bis 70 Vol.% Metall- und/oder Keramikpulver, 30 bis 60 Vol.% eines thermoplastischen Binders und 0 bis 5 Vol.% Dispergiermittel und/oder sonstige Hilfsmittel. Gemäß dem verfahrensbedingten Anforderungsprofil ergibt sich damit die Möglichkeit einer rezepturbezogenen Ausgestaltung der jeweiligen Formmasse. Dabei ist es von Bedeutung, dass die Formmasse eine gute Homogenität im thermoplastischen Bereich beim Übergang vom Zylinder des Extruders in den Einlauf der Schlitzdüse aufweist. Ein über die gesamte Düsenbreite gleichmäßiges Fließen, eine gute Schmelzefestigkeit und Dehnbarkeit nach Verlassen der Düse sind Voraussetzungen für ein präzises Glätten von Dickenschwankungen im Zuge des Glättungsprozesses im Glättwalzwerk.

Dabei haben sich besonders thermoplastische Binder, die ein Polymer und einen Weichmacher umfassen, bewährt. Besonders hohe Schmelze- und Raumtemperaturfestigkeit sowie Schmelzedehnung lassen sich mit stickstoffhaltigen Polymeren erzielen und hier wiederum insbesondere mit Bindersystemen auf Basis von Polyurethan und Polyamid. Zur Einstellung der notwendigen Schmelzviskositäten und zur Erzielung ausreichender Raumtemperaturfestigkeiten werden bevorzugt Gemische aus flüssigen und festen Weichmachern verwendet. Als Weichmacher haben sich Fettsäuren, Esther der Fettsäuren und Fettalkohole besonders bewährt. Durch Veränderung der chemischen Beschaffenheit der Weichmacher, dem Verhältnis zueinander und dem Verhältnis von Polymer zu Weichmacher verfügt man über genügend Möglichkeiten der Rezepturanpassung an die jeweiligen Pulverwerkstoffe. Das bevorzugte Volumenverhältnis Polymer zu Weichmacher beträgt dabei 1:1 bis 1:5,7. Es können des Weiteren die bei der Verarbeitung von plastifizierten Pulvermassen üblichen Dispergier- und Hilfsstoffe verwendet werden.

Die erfindungsgemäßen Binder verleihen der Formmasse bei Temperaturen von 50 bis 200°C gute thermoplastische Eigenschaften. Die erfindungsgemäßen Polymere bewirken, dass die Formmasse bei Raumtemperatur eine ausreichende Festigkeit und Elastizität aufweist. Die erfindungsgemäßen Weichmacherkomponenten verleihen der Formmasse einen trockenen Griff ohne ausgeprägte Klebeneigung.

Die erfindungsgemäße Rezepturgestaltung verhindert die unerwünschte Rissbildung beim Trocknungsprozess auch bei dicken Wandstärken. Es ist möglich, den ausgetragenen Grünling direkt dem Glättwalzwerk zuzuführen. Dies und die Verwendung eines Extruders ergeben einen kontinuierlichen und damit sehr wirtschaftlichen Prozess der Formkörperherstellung. Weiters ist es auch möglich, den Entbinderungsprozess, der sowohl chemisch, thermisch oder chemisch und thermisch durchgeführt werden kann und das nachgelagerte Sintern in die Prozesslinie zu integrieren.

Unter Sintern sind dabei alle Prozesse zu verstehen, die zu einer Erhöhung der Festigkeit führen. Dies muss nicht mit einer Erhöhung der Dichte verbunden sein. Auch eine Wärmebehandlung, die beispielsweise nur zu einer Brückenbildung zwischen den Körnern führt, fällt daher unter dem Begriff Sintern.

Um eine höhere Homogenität der Formmasse zu gewährleisten, ist es vorteilhaft, dass diese vor dem Extrudieren gemischt und bei einer Temperatur zwischen 60°C und der Zersetzungstemperatur des jeweiligen Binders geknetet wird. Bei Temperaturen < 60°C wird die Knetkraft zu groß und die Homogenität der Knetmasse ist nicht ausreichend. Als Extruder eignen sich besonders Einschnecken, Doppelschnecken, Vielwellen- und Kaskadenextruder.

Auch das in der Kunststofftechnik übliche Verfahren der Coextrusion, nämlich ein Zusammenführen von artgleichen oder fremdartigen Formmasseschmelzen vor dem Verlassen der Düse, kann in Verbindung mit dem erfindungsgemäßen Verfahren zur Anwendung kommen.

Da die erfindungsgemäßen, hochgefüllten Formmassen mit Pulveranteilen von 40 bis 70 Vol.% Metall und/oder Keramikpulver stark weich gemachte Polymersysteme mit relativ niedrigem Schmelzbereich benötigen, ist eine entsprechende Verarbeitungstemperatur, die bei 50 bis 200°C, bevorzugt bei 60 bis 150°C liegt, anlagentechnisch zu berücksichtigen. Das bedeutet eine Modifizierung der Plastifiziereinheit des Extruders durch entsprechende Veränderung der Schnecken- und Zylindergeometrie im Vergleich zu in der Kunststoffindustrie üblicherweise eingesetzten Extrudern, beispielsweise durch Erhöhung der Kompressionszone der Schnecke.

In besonderem Maße muss auch die Düsenkonstruktion des Extruders, welche für den gleichmäßigen Fluss der Formmasse über die gesamte Arbeitsbreite verantwortlich ist, angepasst werden. Es wurde gefunden, dass der Austrittsbereich der Schlitzdüse vorzugsweise zu temperieren ist, und zwar so, dass die Temperatur der Formmasse um 5 bis 30°C gesenkt wird. Weiters wurde gefunden, dass die Prozesssicherheit erhöht werden kann, wenn im Austrittsbereich ein langer Parallelteil zur Massedruckerhöhung eingesetzt wird. Der Düsenspalt der Schlitzdüse weist vorteilhafterweise eine Höhe von 0,5 bis 12 mm und ein Höhen- zu Breitenverhältnis von 1:9 bis 1:600 auf. Bei Schlitzdüsenhöhen unter 0,5 mm kommt es zu einem unzulässig hohen Druckaufbau und damit verbunden zu verstärktem Verschleiß. Bei einer Höhe über 12 mm bereitet der zu geringe Druckaufbau Schwierigkeiten mit der Flussverteilung in der Schlitzdüse und es muss mit speziell angepassten Düsen, z.B. mit deutlich verlängerten Düsenlippeneinsätzen gearbeitet werden.

Um eine gute Glättwirkung im Glättvorgang zu erzielen, wird die Glättwalze temperiert und zwar so, dass der Grünling im Walzspalt eine Temperatur im thermoplastischen Bereich des Binders aufweist. Der Glättvorgang kann durch ein Duo-Glättwalzwerk durchgeführt werden, wobei der Grünling in einem Glättvorgang geglättet wird. Es können jedoch auch mehrere Duo-Glättwalzwerke hintereinander angeordnet sein. Als besonders vorteilhaft hat es sich erwiesen, wenn der Grünling in einem Trio-Glättwalzwerk durch zwei Glättvorgänge geglättet wird, wobei zwischen dem ersten und dem zweiten Glättvorgang der Grünling an der mittleren Glättwalze anliegt. Die Dickenabnahme pro Glätlvorgang beträgt vorteilhafterweise zwischen 0 % und 30 %. 0 % heißt, dass keine Dickenabnahme auftritt, jedoch dass Vertiefungen und Erhöhungen des Grünlings ausgeglichen werden. Beträgt die Dickenabnahme pro Glättvorgang > 30 %, kommt es zu Materialanhäufungen vor der Glättwalze und damit verbunden zu Lufteinschlüssen im Grünling.

Der Grünling kann im Zuge des Glättvorganges auch einem Prägeprozess unterzogen werden. Durch Verwendung von entsprechend strukturierten Prägewalzen kann dieser Prägevorgang auch kontinuierlich erfolgen.

Mit dem erfindungsgemäßen Verfahren lassen sich bevorzugt geglättete Grünlinge mit einer Dicke von 0,1 bis 10 mm und einem Dicken- zu Breitenverhältnis von 1:10 bis 1:700 herstellen.

Der geglättete Grünling wird vorzugsweise durch Abzugswalzen geführt. Insbesondere bei Pulver mit hoher Dichte hat es sich als vorteilhaft erwiesen, zwischen Abzugswalze und Glättwalze ein Förderband anzuordnen, das sich mit der Geschwindigkeit des geglätteten Grünlings bewegt. Damit werden ein Durchhängen und eine damit verbundene Dehnung des Grünlings nach dem Verlassen der Glättwalze unterbunden. Als Förderband wird vorteilhafterweise ein gekühltes Stahlband eingesetzt. Der geglättete Grünling kann weiteren formgebende Prozessen unterzogen werden, beispielsweise Tiefziehen, Prägen, Biegen oder Stanzen.

Erfolgen das Entbindem und das Sintern nicht kontinuierlich, wird der geglättete Grünling bevorzugt auf einer Haspel aufgewickelt. Das Förderband wird dabei so gekühlt, dass der geglättete Grünling auf eine Temperatur T abgekühlt wird, mit Raumtemperatur < T < Raumtemperatur plus 20°C.

Sind aus rezepturtechnischen Gründen nicht ausreichend hohe Formmassenfestigkeiten zu realisieren, so besteht anlagentechnisch die Möglichkeit, den Prozess unter Verwendung von Stützfolien zu betreiben. Bei dieser Arbeitsweise läuft gleichzeitig mit dem Grünling auf dessen Ober- und Unterseite eine Kunststoff- oder Silikonpapierfolie in den Walzenspalt des Glättwalzwerkes ein, so dass auf den eingeschlossenen Grünling keine unzulässig hohen Abzugskräfte einwirken können. Das Folienmaterial ist so auszuwählen, dass bei den gegebenen Prozesstemperaturen keine Erweichung auftritt. Als besonders geeignet haben sich Polyesterfolien und Silikontrennpapiere erwiesen. Nach dem Abkühlen entsteht eine beschichtete Grünlingsfolie, bei der man die beiden Stützfolien durch Abziehen wieder entfernen kann. Das Arbeiten mit einer Stützfolie ist auch dann vorteilhaft, wenn der Grünling aufgrund der Binderrezeptur nur langsam erstarrt oder an den Walzenoberflächen des Glättwalzwerkes zu stark anhaftet. Auch bei zu geringer Festigkeit der Grünfolie ist eine Verwendung von Stützfolien günstig, da damit das Abreißen zwischen Glätt- und Abzugswalze verhindert wird.

Eine weitere Variante des erfindungsgemäßen Verfahrens besteht darin, dass auf dem Grünling ein- oder beidseitig zumindest ein weiterer sich in seiner chemischen und/oder physikalischen Konsistenz unterscheidender Grünling aufgebracht und durch einen Glättvorgang mit diesem verbunden wird. Die Grünlinge können sich dabei in der Teilchengröße des eingesetzten Metallpulvers unterscheiden. Damit ist es möglich, beispielsweise die Porosität nach dem Sintervorgang zu steuern. Wird der mittlere Grünling beispielsweise aus deutlich gröberem, weniger sinteraktivern Pulver hergestellt und die äußeren Grünlinge aus entsprechend feinerem Pulver gefertigt, so stellt sich nach dem Sintervorgang ein Produkt ein, das in der Mitte eine deutlich höhere Porosität und damit auch Gas- oder Flüssigkeitsdurchlässigkeit besitzt, als in den entsprechenden Randzonen.

Weiters ist es auch möglich, im Grünling blähfähige Platzhalter, z.B. treibmittelhaltige Polystyrol-Perlen, einzuarbeiten. Der Grünling kann durch entsprechende Heißdampfbehandlung, bevorzugt bei Temperaturen im Bereich zwischen 90 und 130°C, in einer geschlossenen Form mit perforierten Seitenwänden aufgeschäumt werden. Wird nun mit dem zuvor erwähnten Verfahren ein Dreischichtverbund hergestellt, wobei die mittlere Schicht aus einem Grünling mit blähfähigen Platzhaltern besteht, erhält man nach der Heißdampfbehandlung und dem Konsolidierungsprozess einen Verbundkörper mit porenfreien Außenflächen und geschäumter Kemstruktur. Das Herstellen eines Verbundgrünlings kann, wie bereits beschrieben, auch durch Coextrusion erfolgen.

Weitere bevorzugte Verfahrensmerkmale sind:
- Der Einsatz von Metallpulver zur Herstellung der Formmasse, und hier wiederum insbesondere einer Fe-Basis-Legierung oder eines Refraktärmetalls.
- Der Einsatz von oxidkeramischem Pulver zur Herstellung der Formmasse, und hier wiederum insbesondere Al₂O₃.
- Die Trocknung des geglätteten Grünlings erfolgt bei einer Temperatur von 50 bis 120°C,
- Thermisches Entbindern und Sintern erfolgen in einer Anlage.
- Thermisches Entbindem und Sintern erfolgen in separaten Anlagen.
- Der Grünling wird mit einer Aufheizgeschwindigkeit < 5°C / min. auf eine Temperatur von 170 bis 400°C, anschließend mit einer Aufheizgeschwindigkeit < 10°C / min. auf eine Temperatur von 500 bis 800°C erhitzt, und anschließend bei einer Temperatur entsprechend der jeweiligen Festphasen- oder Flüssigphasensintertemperatur des eingesetzten Werkstoffsystems gesintert.
- Der Sinterprozess wird so geführt, dass der Formkörper eine offenporige Struktur aufweist.
- Der Formkörper mit offenporiger Struktur wird in einer Brennstoffzelle eingesetzt.
- Der Sinterprozess wird so geführt, dass der Formkörper eine Dichte größer 95 % der theoretischen Dichte aufweist.

Im Folgenden wird die Erfindung durch Beispiele beschrieben.

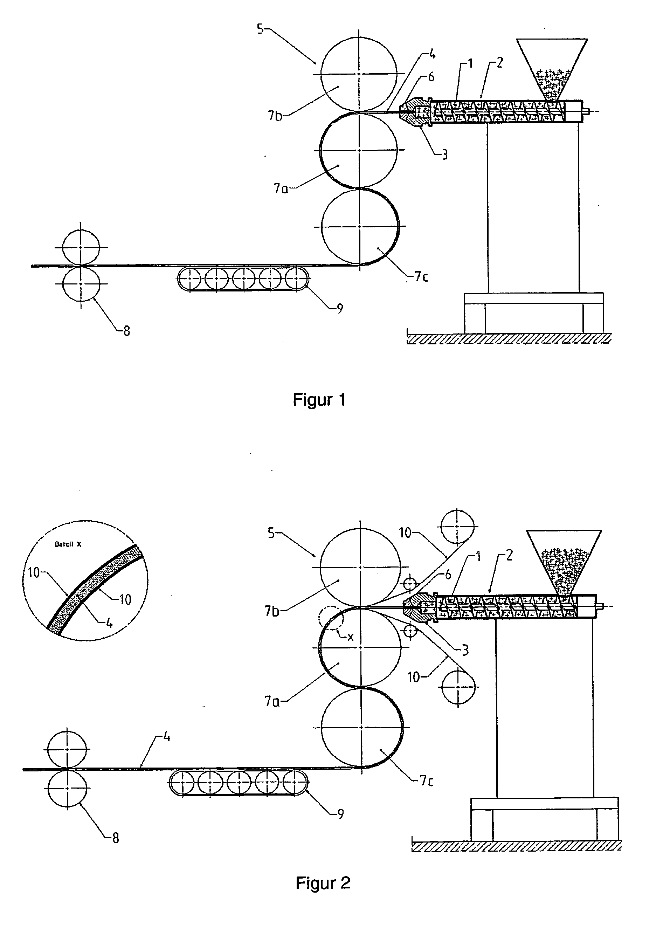

Figur 1 zeigt die dem erfindungsgemäßen Verfahren entsprechende Anlagenkonzeption mit Einschneckenextruder, Trio-Glättwalzwerk und Förderband.
Figur 2 zeigt die dem erfindungsgemäßen Verfahren entsprechende Anlagenkonzeption gemäß Figur 1, jedoch unter Verwendung von Stützfolien,

### Beispiel 1

Verdüstes Pulver der Stahlsorte 316 L mit einer mittels Laserapparatur gemessenen Teilchengröße d von 25 µm wurde in einem Knetaggregat bei 140°C mit folgenden Binderkomponenten gemischt und bis zu einem minimalen Knetwiderstand geknetet:
■ 91,0 Gew.% Chrom-Nickel-Pulver
■ 4,0 Gew.% Polyamid
■ 3,0 Gew.% aromatischer Carbonsäure-Ester eines aliphatischen Alkohols mit einer Kettenlänge von C12 bis C22
■ 2,0 Gew.% aromatischer Carbonsäure-Esther eines aliphatischen Alkohols mit einer Kettenlänge von C12 bis C18
■ 3,0 Gew.% Fettsäure mit einer Kettenlänge von C16 bis C22.

Diese Masse wurde aus dem Knetaggregat bei 100°C ausgetragen, abgekühlt und zu einer Formmasse -1- in Granulatform mit ca. 3 bis 4 mm Teilchendurchmesser konfektioniert. Die Formmasse -1-wurde mittels eines Einschneckenextruders -2- bei Zytinderzonentemperaturen von 80°C bis 130°C aufgeschmolzen und durch eine Schlitzdüse -3- mit einer Spalthöhe von 1,5 mm und einer Spaltbreite von 190 mm und einer Düsentemperatur von 95°C ausgetragen. Der so hergestellt, ca. 95°C warme Grünling -4- wurde in den Walzenspalt eines Trio-Glättwerkes direkt zugeführt, wobei der Abstand zwischen Schlitzdüse -3- und Walzenspalt ca. 20 mm betrug. Der Grünling -4-wurde im ersten und zweiten Walzenspalt durch gekühlte Walzen -7- auf ein Dickenmaß von 1,2 mm geglättet und auf Raumtemperatur abgekühlt. Dieser Prozess erfolgte kontinuierlich.

Danach wurde der Grünling -4- abgelängt und diskontinuierlich weiterverarbeitet, und zwar zunächst durch chemische Teilentbinderung in Aceton bei 40°C. Nach 12 Stunden waren 90 Gew.% der in Aceton löslichen Rezepturkomponenten entfernt, so dass nach Abdestillieren des im Grünling eingedrungenen Acetons ein offenporöser Braunling mit ca. 4,5 Gew.% Restbinder vorlag. Dieser überwiegend polymere Binderanteil wurde pyrolytisch durch Erhitzen auf 600°C bei einem Temperaturanstieg von 10°C / Minute und einer Haltezeit von 30 Minuten entfernt. Der entbinderte Grünling -4- wurde bei 1250°C 60 Minuten gesintert. Der Sinterling wies eine gute Oberflächenbeschaffenheit und über die Fläche nur geringfügige Dickenschwankungen auf.

### Beispiel 2

Handelsübliches, sinterfähiges Aluminiumoxid mit einem Aluminiumoxidgehalt von mindesten 99,7 Gew.% und einer mittels Laserapparatur gemessenen Teilchengröße d von ca. 1,0 µm wurde bei 140°C mit folgenden

Binderkomponenten gemischt und bis zu einem minimalen Knetwiderstand geknetet:
■ 85,0 Gew.% Al-Oxid-Pulver
■ 5,0 Gew.% Polyamid
■ 7,0 Gew.% aromatischer Carbonsäure-Ester eines aliphatischen Alkohols mit einer Kettenlänge von C12 bis C22
■ 3,0 Gew.% Fettsäure mit einer Kettenlänge von C16 bis C22.

Diese Masse wurde aus einem Knetaggregat mit 100°C ausgetragen, abgekühlt und zu einer Formmasse -1- in Granulatform mit einem Teilchendurchmesser von ca. 3 bis 4 mm konfektioniert. Die Formmasse -1- wurde mittels eines Einschneckenextruders -2- bei Zylinderzonentemperaturen von 80 bis 130°C aufgeschmolzen, mittels einer Schlitzdüse -3- mit einer Spaltdicke von 3,0 mm und einer Spaltbreite von 400 mm bei einer Düsentemperatur von 100°C ausgetragen und direkt in ein nachgeschaltetes Trio-Glättwalzwerk -5-zugeführt. Der Abstand zwischen Schlitzdüse -3- und dem ersten Walzenspalt des Trio-Glättwalzwerkes betrug 20 mm. Der Grünling -4- wurde im ersten und zweiten Walzenspalt des Glättwalzwerkes -5- auf ein Dickenmaß von 2,3 mm geglättet und danach auf Raumtemperatur abgekühlt. Danach wurde die so hergestellte Grünlingsplatte zunächst in Aceton bei 40°C chemisch teilentbindert. Nach 24 h waren ca. 90 Gew% der in Aceton löslichen Rezepturkomponenten entfernt, so dass nach Abdestillieren des im Grünling eingedrungenen Acetons ein offenporiger Braunling mit ca. 5,5 Gew.% Restbinder vorlag. Dieser überwiegend polymere Binderanteil wurde pyrolytisch durch Erhitzen in einem Luftofen auf 600°C mit einem Temperaturanstieg von 2°C / Minute und einer Haltezeit von 30 Minuten entfernt. Der Sinterprozess erfolgte mit einem Temperaturanstieg von 10°C / Minute auf 1650°C, wobei die Haltezeit bei dieser Temperatur 1 h betrug. Damit konnte eine ebene Aluminiumoxidplatte mit guter Oberflächenqualität und einer Dichte über 3,85 g/cm hergestellt werden.

## Patentansprüche

1. Verfahren zur Herstellung eines Formkörpers, das zumindest die folgenden Verfahrensschritte umfasst:
■ Herstellung einer Formmasse (1), umfassend 40 bis 70 Vol.% Metallund/oder Keramikpulver, 30 bis 60 Vol.% eines thermoplastischen Binders und 0 bis 5 Vol.% Dispergiermittel und/oder sonstige Hilfsmittel; wobei der thermoplastische Binder ein stickstoffhaltiges Polymer und einen Weichmacher umfasst;
■ Plastifizieren der Formmasse in einem Extruder (2) und Herstellung eines Grünlings (4) durch Austragen der Formmasse über eine Schlitzdüse (3)
■ Zuführen des Grünlings (4) in ein Glättwalzwerk (5);
■ Glätten des Grünlings (4) durch ein oder mehrere Glättvorgänge;
■ Chemisches und/oder thermisches Entbindern des geglätteten Grünlings (4);
■ Sintern des zumindest teilweise entbinderten Grünlings (4).

2. Verfahren nach Anspruch 1, **dadurch gekennzeichnet, dass** der ausgetragene Grünling (4) direkt dem Glättwalzwerk (5) zugeführt wird.

3. Verfahren nach Anspruch 1 oder 2, **dadurch gekennzeichnet, dass** Plastifizieren, Austragen und Glätten kontinuierlich erfolgen.

4. Verfahren nach einem der Ansprüche 1 bis 3, **dadurch gekennzeichnet, dass** das Entbindern und Sintern kontinuierlich erfolgen.

5. Verfahren nach einem der Ansprüche 1 bis 4, **dadurch gekennzeichnet, dass** die Formmasse (1) gemischt und bei einer Temperatur T geknetet wird, mit 60°C < T < Zersetzungstemperatur des Binders.

6. Verfahren nach einem der Ansprüche 1 bis 5, **dadurch gekennzeichnet, dass** artgleiche oder fremdartige Formmassen vor dem Verlassen der Schlitzdüse (3) zusammengeführt werden.

7. Verfahren nach einem der Ansprüche 1 bis 6, **dadurch gekennzeichnet, dass** die Verarbeitungstemperatur der Formmasse (1) im Extruder 50 bis 200°C beträgt.

8. Verfahren nach einem der Ansprüche 1 bis 7, **dadurch gekennzeichnet, dass** der Austrittsbereich (6) der Schlitzdüse (3) temperiert wird, so dass die Temperatur der Formmasse (1) um 5 bis 30°C gesenkt wird.

9. Verfahren nach einem der Ansprüche 1 bis 8, **dadurch gekennzeichnet, dass** die Schlitzdüse (3) eine Höhe von 0,5 mm bis 12 mm und ein Höhen - zu - Breiten - Verhältnis von 1:9 bis 1:600 aufweist.

10. Verfahren nach einem der Ansprüche 1 bis 9, **dadurch gekennzeichnet, dass** die Glättwalze (7) temperiert wird, und zwar so, dass der Grünling (4) im Walzspalt eine Temperatur im thermoplastischen Bereich des Binders aufweist.

11. Verfahren nach einem der Ansprüche 1 bis 10, **dadurch gekennzeichnet, dass** der Grünling (4) in einem Duo-Glättwalzwerk geglättet wird.

12. Verfahren nach einem der Ansprüche 1 bis 10, **dadurch gekennzeichnet, dass** der Grünling (4) in einem Trio-Glättwalzwerk durch zwei Glättvorgänge geglättet wird, wobei zwischen erstem und zweitem Glättvorgang der Grünling (4) an der mittleren Glättwalze (7a) anliegt.

13. Verfahren nach einem der Ansprüche 1 bis 12, **dadurch gekennzeichnet, dass** die Dickenabnahme pro Glättvorgang 0 bis 40 % beträgt.

14. Verfahren nach einem der Ansprüche 1 bis 13, **dadurch gekennzeichnet, dass** die Glättwalze (7) strukturiert ist.

15. Verfahren nach einem der Ansprüche 1 bis 14, **dadurch gekennzeichnet, dass** der geglättete Grünling (4) durch zumindest zwei Abzugswalzen (8) geführt wird.

16. Verfahren nach einem der Ansprüche 1 bis 15, **dadurch gekennzeichnet, dass** zwischen Glättwalzwerk (5) und Abzugwalzen (8) ein Förderband (9) angeordnet ist, das sich mit der Geschwindigkeit des geglätteten Grünlings (4) bewegt.

17. Verfahren nach Anspruch 16, **dadurch gekennzeichnet, dass** das Förderband (9) gekühlt wird, wodurch der geglättete Grünling (4) auf eine Temperatur T abgekühlt wird, mit Raumtemperatur < T < Raumtemperatur + 20°C.

18. Verfahren nach einem der Ansprüche 1 bis 17, **dadurch gekennzeichnet, dass** der Grünling (4) nach dem Verlassen der Schlitzdüse (3) beidseitig durch zwei sich mit identer Geschwindigkeit mitbewegenden Stützfolien (10), bevorzugt aus PET oder Silikontrennpapier, bei den nachfolgenden Prozessschritten gestützt wird.

19. Verfahren nach einem der Ansprüche 1 bis 18, **dadurch gekennzeichnet, dass** auf dem Grünling (4) ein- oder beidseitig zumindest ein weiterer, sich in seiner chemischen und/oder physikalischen Konsistenz unterscheidender Grünling aufgebracht und durch einen Glättvorgang mit diesem verbunden wird.

20. Verfahren nach einem der Ansprüche 1 bis 19, **dadurch gekennzeichnet, dass** als Polymer ein Polyurethan oder ein Polyamid eingesetzt wird.

21. Verfahren nach einem der Ansprüche 1 bis 20, **dadurch gekennzeichnet, dass** ein Weichmacher aus der Gruppe der Fettsäuren, der Esther der Fettsäuren oder Fettalkohole eingesetzt wird.

22. Verfahren nach einem der Ansprüche 1 bis 21, **dadurch gekennzeichnet, dass** das Volumenverhältnis Polymer zu Weichmacher 1:1 bis 1:5,7 beträgt.

## Claims

1. Process for producing a shaped body, which comprises at least the following process steps:
■ production of a moulding composition (1) comprising from 40 to 70% by volume of metal and/or ceramic powder, from 30 to 60% by volume of a thermoplastic binder and from 0 to 5% by volume of dispersants and/or other auxiliaries; where the thermoplastic binder comprises a nitrogen-containing polymer and a plasticizer;
■ plasticization of the moulding composition in an extruder (2) and production of a green body (4) by discharge of the moulding composition through a slit die (3);
■ introduction of the green body (4) into a smoothing calender (5);
■ smoothing of the green body (4) by means of one or more smoothing processes;
■ chemical and/or thermal removal of binder from the smoothed green body (4);
■ sintering of the green body (4) which has been at least partially freed of binder.

2. Process according to Claim 1, **characterized in that** the green body (4) which has been discharged is fed directly to the smoothing calender (5).

3. Process according to Claim 1 or 2, **characterized in that** plasticization, discharge and smoothing are carried out continuously.

4. Process according to any of Claims 1 to 3, **characterized in that** binder removal and sintering are carried out continuously.

5. Process according to any of Claims 1 to 4, **characterized in that** the moulding composition (1) is mixed and kneaded at a temperature T between 60°C and the decomposition temperature of the binder.

6. Process according to any of Claims 1 to 5, **characterized in that** moulding compositions of the same type or different types are combined before leaving the slit die (3).

7. Process according to any of Claims 1 to 6, **characterized in that** the processing temperature of the moulding composition (1) in the extruder is from 50 to 200°C.

8. Process according to any of Claims 1 to 7, **characterized in that** the temperature of the exit region (6) of the slit die (3) is controlled so that the temperature of the moulding composition (1) is decreased by from 5 to 30°C.

9. Process according to any of Claims 1 to 8, **characterized in that** the slit die (3) has a gap height of from 0.5 mm to 12 mm and a height to width ratio of from 1:9 to 1:600.

10. Process according to any of Claims 1 to 9, **characterized in that** the smoothing roller (7) is heated so that the green body (4) in the gap between the rollers has a temperature in the thermoplastic range of the binder.

11. Process according to any of Claims 1 to 10, **characterized in that** the green body (4) is smoothed in a duo smoothing calender.

12. Process according to any of Claims 1 to 10, **characterized in that** the green body (4) is smoothed in a trio smoothing calender by means of two smoothing processes, with the green body (4) resting against the middle smoothing roller (7a) between the first and second smoothing processes.

13. Process according to any of Claims 1 to 12, **characterized in that** the decrease in thickness per smoothing process is from 0 to 40%.

14. Process according to any of Claims 1 to 13, **characterized in that** the smoothing roller (7) is structured.

15. Process according to any of Claims 1 to 14, **characterized in that** the smoothed green body (4) is conveyed by means of at least two offtake rollers (8).

16. Process according to any of Claims 1 to 15, **characterized in that** a conveyor belt (9) which moves at the speed of the smoothed green body (4) is arranged between smoothing calender (5) and offtake rollers (8).

17. Process according to Claim 16, **characterized in that** the conveyor belt (9) is cooled so that the smoothed green body (4) is cooled to a temperature T between room temperature and room temperature + 20°C.

18. Process according to any of Claims 1 to 17, **characterized in that** the green body (4) is, after leaving the slit die (3), supported on both sides by two carrier sheets (10), preferably of PET or silicone release paper, which move at identical speed during the subsequent process steps.

19. Process according to any of Claims 1 to 18, **characterized in that** at least one further green body which has a different chemical and/or physical consistency is applied to one or both sides of the green body (4) and is joined to the latter by means of a smoothing process.

20. Process according to any of Claims 1 to 19, **characterized in that** a polyurethane or a polyamide is used as polymer.

21. Process according to any of Claims 1 to 20, **characterized in that** a plasticizer selected from the group consisting of fatty acids, esters of fatty acids and fatty alcohols is used.

22. Process according to any of Claims 1 to 21, **characterized in that** the volume ratio of polymer to plasticizer is from 1:1 to 1:5.7.

## Revendications

1. Procédé pour fabriquer un corps de moulage, qui comprend au moins les étapes de procédé suivantes :
■ préparation d'une masse de moulage (1), comprenant 40 à 70 % en volume de poudre de métal et/ou de poudre de céramique, 30 à 60 % en volume d'un liant thermoplastique et 0 à 5 % en volume de dispersant et/ou autres adjuvants, ledit liant thermoplastique comprenant un polymère azoté et un plastifiant ;
■ plastification de la masse de moulage dans une extrudeuse (2) et production d'un compacté brut (4) par expulsion de la masse de moulage par une buse en fente (3) ;
■ admission du compact brut (4) dans un laminoir lisseur (5) ;
■ lissage du compact brut (4) par une ou plusieurs opérations de lissage ;
■ élimination de liant hors du compact brut lissé (4), par voie chimique et/ou thermique ;
■ frittage du compact brut (4) au moins partiellement débarrassé de liant.

2. Procédé selon la revendication 1, **caractérisé en ce que** ledit compact brut (4) est admis directement au laminoir lisseur (5).

3. Procédé selon la revendication 1 ou 2, **caractérisé en ce que** la plastification, l'éjection du compact brut et le lissage s'effectuent en continu.

4. Procédé selon l'une des revendications 1 à 3, **caractérisé en ce que** l'élimination du liant et le frittage s'effectuent de façon continue.

5. Procédé selon l'une des revendications 1 à 4, **caractérisé en ce que** la masse de moulage (1) est mélangée et malaxée à une température T, avec 60°C < T < température de décomposition du liant.

6. Procédé selon l'une des revendications 1 à 5, **caractérisé en ce que** des masses de moulage du même type ou de type différent sont conduits ensemble avant de sortir par la buse en fente (3).

7. Procédé selon l'une des revendications 1 à 6, **caractérisé en ce que** la température de traitement de la masse de moulage (1) dans l'extrudeuse est comprise entre 50 et 200°C.

8. Procédé selon l'une des revendications 1 à 7, **caractérisé en ce que** la zone de sortie (6) de la buse en fente (3) est portée à une température telle que la température de la masse de moulage (1) s'abaisse à une valeur comprise entre 5 et 30°C.

9. Procédé selon l'une des revendications 1 à 8, **caractérisé en ce que** la buse en fente (3) présente une hauteur de 0,5 mm à 12 mm et un rapport hauteur/largeur de 1/9 jusqu'à 1/600.

10. Procédé selon l'une des revendications 1 à 9, **caractérisé en ce que** les rouleaux de laminoir lisseur (7) sont portés à une température telle que le compact brut (4) présente entre eux une température située dans la plage de thermoplasticité du liant.

11. Procédé selon l'une des revendications 1 à 10, **caractérisé en ce que** le compact brut (4) est lissé dans un laminoir lisseur double.

12. Procédé selon l'une des revendications 1 à 10, **caractérisé en ce que** le compact brut (4) est lissé dans un laminoir lisseur triple par deux opérations de lissage, le compact brut (4) étant plaqué contre le rouleau cylindre lisseur central (7a) entre la première et la seconde opération de lissage.

13. Procédé selon l'une des revendications 1 à 12, **caractérisé en ce que** la diminution d'épaisseur par opération de lissage est comprise entre 0 et 40 %.

14. Procédé selon l'une des revendications 1 à 13, **caractérisé en ce que** les rouleaux lisseurs (7) sont structurés.

15. Procédé selon l'une des revendications 1 à 14, **caractérisé en ce que** le compact brut lissé (4) est guidé par au moins deux cylindres distributeurs (8).

16. Procédé selon l'une des revendications 1 à 15, **caractérisé en ce qu'**une bande transporteuse (9), qui se déplace à la même vitesse que le compact brut lissé (4) est disposée entre le laminoir lisseur (5) et les cylindres distributeurs (8).

17. Procédé selon la revendication 16, **caractérisé en ce que** la bande transporteuse (9) est refroidie, et **en ce que** le compact brut lissé (4) est par-là refroidi jusqu'à une température T où :
température ambiante < T < température ambiante + 20°C.

18. Procédé selon l'une des revendications 1 à 17, **caractérisé en ce qu'**après avoir quitté la buse en fente (3) le compact brut (4) est soutenu des deux côtés par deux films de support (10) se déplaçant à la même vitesse, de préférence à base de PET ou de papier de séparation siliconé, lors des étapes de traitement subséquentes.

19. Procédé selon l'une des revendications 1 à 18, **caractérisé en ce qu'**un autre compact brut, se différenciant dans sa consistance chimique et/ou physique, est appliqué sur ledit compact brut (4) sur un côté ou sur les deux et **en ce qu'**il lui est lié par une opération de lissage.

20. Procédé selon l'une des revendications 1 à 19, **caractérisé en ce que** l'on utilise un polyuréthane ou un polyamide comme polymère.

21. Procédé selon l'une des revendications 1 à 20, **caractérisé en ce que** l'on utilise un plastifiant choisi dans le groupe incluant les acides gras, les esters d'acides gras et les alcools gras.

22. Procédé selon l'une des revendications 1 à 21, **caractérisé en ce que** le rapport de volume polymère/plastifiant est compris entre 1/1 et 1/5,7.
